# EUROPEAN PATENT APPLICATION

(11) **EP 4 681 938 A1**
(43) Date of publication of application: **21.01.2026**
(21) Application number: 24769985.3
(22) Date of filing: 14.03.2024
(51) Int. Cl.: B60B 21/02, B60B 21/10, B60B 7/02

(54) **BICYCLE RIM STRUCTURE**

(30) Priority: 14.03.2023 CN 202310237789
(71) Applicant: Giant Manufacturing Co., Ltd., Taichung City, 40763 (TW)
(72) Inventor: LI, Yang-sheng, Taichung City 40763 (TW); SU, Hui-yuan, Taichung City 40763 (TW); TSENG, Wei-han, Taichung City 40763 (TW)
(74) Representative: Adamson Jones
(86) International application number: PCT/CN2024/081602
(87) International publication number: WO 2024/188295

(57) **Abstract**

The present disclosure relates to a bicycle rim structure, in the structure, two outer sidewalls are disposed opposite each other on two sides of the rim structure, and ends of the outer sidewalls are connected to each other. Two top hollow protrusions are respectively at upper portions of the outer sidewalls, each of the top hollow protrusions has a hollow portion, an outward side, a top side and an inner contact side, and an included angle less than 180 degrees is between an extension direction of the outward side and an extension direction of a corresponding one of the outer sidewalls, and the hollow portion is defined by the outward side, the top side and the inner contact side, the top side connects the outward side and the inner contact side, and a width of the top side is greater than at least 5 mm, and thicknesses of the outward side, the top side and the inner contact side are greater than at least 0.6 mm.

## Description

### TECHNICAL FIELD

The present disclosure relates to a bicycle rim structure.

### BACKGROUND TECHNIQUE

A wheel of a bicycle includes a rim and a tire, and the tire is installed on the rim. In some situations, the rider may use a low tire pressure setting to provide a cushioning function for the tire to absorb impacts caused by the ground, and may increase the contact area with the ground to improve the grip by means of the low tire pressure. However, in the event of a strong impact, the tire will be directly pressed on the narrow top wall of the rim due to the low tire pressure, resulting in tire puncture and air leakage (snakebite). Nowadays, in order to reduce the tire puncture and air leakage caused by the impact during riding and to reduce the damage to the rim and other parts caused by the impact, consumers can install, for example, foaming material product in the tire to avoid the above problems. However, the foaming material product installed on the bicycle wheel still has the disadvantages of increase in weight, difficult installation, not enough comfort, and limited grip enhancement, etc.

### SUMMARY

The present disclosure relates to a bicycle rim structure that combines comfort, grip, weight, and resistance to flat tire, and comprises: two outer sidewalls disposed opposite each other on two sides of the rim structure, ends of the outer sidewalls being connected to each other; and two top hollow protrusions respectively at upper portions of the outer sidewalls, wherein each of the top hollow protrusions has a hollow portion, an outward side, a top side and an inner contact side, wherein an included angle less than 180 degrees is between an extension direction of the outward side and an extension direction of a corresponding one of the outer sidewalls, the hollow portion is defined by the outward side, the top side and the inner contact side, the top side connects the outward side and the inner contact side, a width of the top side is greater than at least 5 mm, thicknesses of the outward side, the top side and the inner contact side are greater than at least 0.6 mm.

In some embodiments, the thicknesses of the outward side, the top side and the inner contact side are between 0.6 mm and 1.2 mm. In some embodiments, the outward sides, the top sides and the inner contact sides are straight. In some embodiments, the outward side and the inner contact side are disposed in approximate parallel. In some embodiments, the inner contact sides are smooth planes, and the bicycle rim structure is a hookless rim structure. In some embodiments, a shape of the hollow portion is a rectangle where included angles of four sides are rounded corners. In some embodiments, a shape of the hollow portion is a curved shape, and the thicknesses of the outward side, the top side and the inner contact side are defined as shortest distances from the hollow portion respectively to outer surfaces of the outward side, the top side and the inner contact side. In some embodiments, the hollow portion includes a plurality of hollow sub-portions. In some embodiments, the inner contact sides of the top hollow protrusions are configured to clamp a tire, and the top sides of the top hollow protrusions are configured to support the tire. In some embodiments, the bicycle rim structure further comprises: an outer top wall connected between top hollow protrusions and not protruding from top hollow protrusion, wherein, the outer top wall and the outer sidewalls form a cavity, a width of the cavity exceeds centers of the hollow portions but does not exceed a maximum distance of the hollow portions. In some embodiments, each of the top hollow protrusions has a bottom side, the hollow portion is defined by the outward side, the top side, the inner contact side and the bottom side, and the bottom side connects the outward side and the inner contact side. In some embodiments, the outward side, the top side, the inner contact side and the bottom side form a shock absorbing structure, two ends of the bottom side are respectively connected to one of the outer sidewalls and the outer top wall, and the bottom side is beside the cavity. In some embodiments, the bottom side and the outer top wall have an interconnected inner wall surface at one side of the cavity, and the inner wall surface is horizontally straightly extended from the bottom side to directly below a notch of the outer top wall. In some embodiments, an included angle between an extension direction of the inner wall surface and an extension direction of a corresponding one of the outer sidewalls is between 35-60 degrees. In some embodiments, the rim structure has a rim height, and a ratio of the rim height to a width of the top side is smaller than 16.

The present disclosure also relates to a hookless rim structure for bicycle, comprising: two outer sidewalls, disposed opposite each other on two sides of the rim structure, ends of the outer sidewalls being connected to each other; and two top hollow protrusions, respectively at upper portions of the outer sidewalls, wherein each of the top hollow protrusions has a hollow portion, an outward side, a top side and an inner contact side, wherein an included angle less than 180 degrees is between an extension direction of the outward side and an extension direction of a corresponding one of the outer sidewalls, the hollow portion is defined by the outward side, the top side and the inner contact side, the top side connects the outward side and the inner contact side, a width of the top side is greater than at least 5 mm, thicknesses of the outward side, the top side and the inner contact side is greater than at least 0.6 mm, wherein, each of the top hollow protrusions has a bottom side, the hollow portion is defined by the outward side, the top side, the inner contact side and the bottom side, and the bottom side connects the outward side and the inner contact side, wherein, the thicknesses of the outward side, the top side and the inner contact side are between 0.6 mm and 1.2 mm, wherein, the outward sides, the top sides and the inner contact sides are straight, wherein, the outward sides are respectively disposed in approximate parallel with corresponding ones of the inner contact sides, wherein, the inner contact sides are smooth planes, wherein, the inner contact sides of the top hollow protrusions are configured to clamp a tire, and the top sides of the top hollow protrusions are configured to support the tire, wherein, the bicycle rim structure further comprises an outer top wall, the outer top wall is connected between the top hollow protrusions and does not protrude from the top hollow protrusions, wherein, the outer top wall and the outer sidewalls form a cavity, and a width of the cavity exceeds centers of the hollow portions but does not exceed a maximum distance of the hollow portions, wherein, the outward side, the top side, the inner contact side and the bottom side form a shock absorbing structure, two ends of the bottom side are respectively connected to one of the outer sidewalls and the outer top wall, and the bottom side is beside the cavity, wherein, one of the bottom sides and the outer top wall have an interconnected inner wall surface at one side of the cavity, and the inner wall surface is horizontally straightly extended from the bottom side to directly below a notch of the outer top wall, wherein, an included angle between an extension direction of the inner wall surface and an extension direction of a corresponding one of the outer sidewalls is between 35-60 degrees, wherein, the rim structure has a rim height, and a ratio of the rim height to a width of the top side is smaller than 16.

As mentioned above, the hollow portion of the top hollow protrusion is located with the spaces defined by the outward side, the top side and the inner contact side, the width of the top side is greater than at least 5 mm, and the thicknesses of the outward side, the top side and the inner contact side are greater than at least 0.6 mm, so that the rim structure can effectively increase the contact area between the rim and the tire and withstand the load, thus achieving the effect of resistance to impact and resistance to snakebite for the bicycle rim structure, and avoiding the disadvantages of increase in weight and difficult installation, and combining characteristics of comfort, grip, weight and resistance to flat tire, etc. Even if, for example, the foaming material product is not installed on the wheel or in usage condition that the tire pressure is not high, it still retains the aforementioned effects of resistance to impact and resistance to snakebite. It is suitable for road bikes, mountain bikes, and all kinds of bicycle rims.

### BRIEF DESCRIPTION OF DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
Figs. 1-1E are cross-sectional views of bicycle wheel rim structures according to some embodiments.
Figs. 2A and 2B are schematic views of a bicycle rim structure with loads applied to the rim in the radial and lateral directions according to an embodiment.

### Reference sign list:

1: rim structure
11, 12: outer sidewall
13, 14: top hollow protrusion
131, 131a, 131b, 131c, 131d, 141, 141a, 141b, 141c, 141d: hollow portion
1311, 1312, 1411, 1412: hollow sub-portion
132, 142: outward side
133, 143: top side
134, 144: inner contact side
135, 145: bottom side
136, 146: center
15: outer top wall
151, 152: notch
16: cavity
161, 162: inner wall surface
D1, W: width
D2: maximum distance
H: rim height
Ta, Tb, Tc, Td: thickness

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

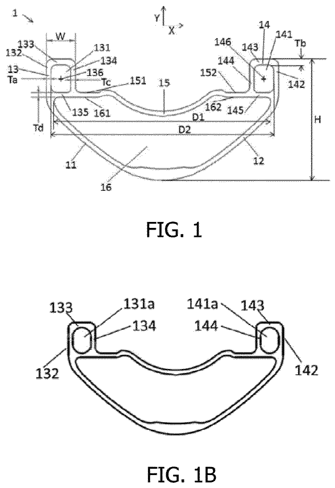

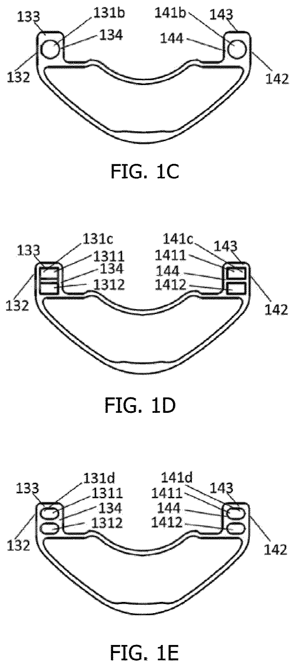

Fig. 1 is a cross-sectional view of a bicycle rim structure according to an embodiment. The cross-sectional view in Fig. 1 shows a cross-section along the radial direction of the rim, where Y direction is the radial direction of the rim, X direction is the lateral direction of the rim parallel to the axial direction of the rim (the width direction), and the direction perpendicular to the drawing is the tangent direction of the rim.

As shown in Fig. 1, a bicycle rim structure 1 includes two outer sidewalls 11, 12 and two top hollow protrusions 13, 14, the outer sidewalls 11, 12 are disposed opposite each other on two sides of the rim structure 1, and ends of the outer sidewalls 11, 12 are connected to each other. The outer sidewalls 11, 12 may be provided with apertures to accommodate spokes, and the other end of the spoke is connected to the hub. For the entire rim structure 1, the outer sidewalls 11, 12 are near the center of the rim structure 1 (hub side), and the top hollow protrusions 13, 14 are far from the center of the rim structure 1.

The top hollow protrusions 13, 14 are respectively at upper portions of the outer sidewalls 11, 12, the top hollow protrusion 13 has a hollow portion 131, an outward side 132, a top side 133 and an inner contact side 134, an included angle less than 180 degrees is between an extension direction of the outward side 132 and an extension direction of a corresponding one of the outer sidewalls 11, and the hollow portion 131 is defined by the outward side 132, the top side 133 and the inner contact side 134, for example, the hollow portion 131 is within the space enclosed and formed by the outward side 132, the top side 133 and the inner contact side 134, the top side 133 connects the outward side 132 and the inner contact side 134, and the outward side 132 is at an upper portion of the outer sidewall 11. The top hollow protrusion 14 has a hollow portion 141, an outward side 142, a top side 143 and an inner contact side 144, an included angle less than 180 degrees is between an extension direction of the outward side 142 and an extension direction of a corresponding one of the outer sidewall 12, and the hollow portion 141 is defined by the outward side 142, the top side 143 and the inner contact side 144, for example, the hollow portion 141 is within the space enclosed and formed by the outward side 142, the top side 143 and the inner contact side 144, the top side 143 connects the outward side 142 and the inner contact side 144, and the outward side 142 is at an upper portion of the outer sidewall 12.

A width W of the top sides 133, 143 is greater than at least 5 mm, and thicknesses Ta, Tb, Tc of the outward sides 132, 142, the top sides 133, 143 and the inner contact sides 134, 144 are greater than at least 0.6 mm. For example, the thicknesses Ta, Tb, Tc of the outward sides 132, 142, the top sides 133, 143 and the inner contact sides 134, 144 are between 0.6 mm and 1.2 mm. The hollow portions 131, 141 may be cavities without containing any solid elements or materials.

In one embodiment, the rim structure 1 has a rim height H, a ratio of the rim height H to the width W of the top side is smaller than 16, preferably the ratio being about 4. For example, the rim height H is about 21 cm and the width W of the top side is about 5 cm, so the ratio is about 4.2. In one embodiment, the rim structure 1 may be manufactured by aluminum extrusion, and the material of the rim structure 1 may be aluminum. Alternatively, in other embodiments, the rim structure 1 may be made in other ways, and the material may be a metal such as aluminum, steel, etc. or carbon fiber.

In one embodiment, the outward sides 132, 142, the top sides 133, 143 and the inner contact sides 134, 144 are straight. The outward side 132 and the inner contact side 134 are disposed in approximate parallel, and the outward side 142 and the inner contact side 144 are disposed in approximate parallel. The inner contact sides 134, 144 are smooth planes, the top hollow protrusions 13, 14 respectively have bottom sides 135, 145, and the hollow portion 131 is defined by the outward side 132, the top side 133, the inner contact side 134 and the bottom side 135, for example, the hollow portion 131 is enclosed by the outward side 132, the top side 133, the inner contact side 134 and the bottom side 135, and the bottom side 135 connects the outward side 132 and the inner contact side 134, the hollow portion 141 is defined by the outward side 142, the top side 143, the inner contact side 144 and the bottom side 145, for example, the hollow portion 141 is enclosed by the outward side 142, the top side 143, the inner contact side 144 and the bottom side 145, and the bottom side 145 connects the outward side 142 and the inner contact side 144, and the hollow portions 131, 141 are closed hollow. In some embodiments, a thickness Td of the bottom sides 135, 145 is greater than at least 0.6mm, for example, the thickness Td of the bottom sides 135, 145 is between 0.6 mm and 1.2 mm.

In one embodiment, the shapes of the hollow portions 131, 141 are rectangle. Besides, in some embodiments, as shown in Fig. 1B to Fig. 1E, the shapes of the hollow portions 131, 141 may be other shapes or includes a plurality of hollow sub-portions.

As shown in Fig. 1B and Fig. 1C, the shape of the hollow portion is a curved shape, for example in FIG. 1B, the shapes of the hollow portions 131a, 141a are oval, the thicknesses of the outward sides 132, 142, the top sides 133, 143 and the inner contact sides 134, 144 are defined as the shortest distances from the hollow portions 131a, 141a respectively to the outer surfaces of the outward sides 132, 142, the top sides 133, 143 and the inner contact sides 134, 144. In Fig. 1C, the shapes of the hollow portions 131b, 141b are circular. In other embodiments, the hollow portion may be other types of curved shapes.

Alternatively, as shown in Fig. 1D and Fig. 1E, the hollow portion includes a plurality of hollow sub-portions, and the shape of the hollow sub-portion may be rectangle, curved shape, or other shape of the closed pattern. For example in Fig. 1D, the hollow portion 131c includes a plurality of hollow sub-portions 1311, 1312, the hollow portions 141c includes a plurality of hollow sub-portions 1411, 1412, and the shapes of the hollow sub-portions 1311, 1312, 1411, 1412 are rectangle. In Fig. 1E, the hollow sub-portions 1311, 1312, 1411, 1412 of the hollow portions 131d, 141d are curved shape, for example oval. In other embodiments, the hollow sub-portion may be circular or other types of curved shapes. The thicknesses of the outward sides 132, 142, the top sides 133, 143 and the inner contact sides 134, 144 are defined as the shortest distances from the hollow sub-portions 1311, 1312, 1411, 1412 respectively to the outer surfaces of corresponding ones of the outward sides 132, 142, the top sides 133, 143 and the inner contact sides 134, 144.

In one embodiment, the rim structure 1 further includes an outer top wall 15, the outer top wall 15 is connected between the top hollow protrusions 13, 14 and does not protrude from the top hollow protrusions 13, 14, a shock absorbing structure is formed by the outward side 132, the top side 133, the inner contact side 134 and the bottom side 135, and two ends of the bottom side 135 are respectively connected to the outer sidewall 11 and the outer top wall 15, and a shock absorbing structure is formed by the outward side 142, the top side 143, the inner contact side 144 and the bottom side 145, and two ends of the bottom side 145 are respectively connected to the outer sidewall 12 and the outer top wall 15. In one embodiment, the majority of the rim structure 1 may be one-piece formed, for example, the outward sides 132, 142, the top sides 133, 143, the inner contact sides 134, 144 and the bottom sides 135, 145 of the outer sidewalls 11, 12, the outer top wall 15 and the top hollow protrusions 13, 14 are one-piece formed bodies manufactured by using aluminum extrusion.

The outer top wall 15, the top sides 133, 143 and the inner contact sides 134, 144 form a tire installation surface, for example, the outer top wall 15 and the inner contact sides 134, 144 may be formed with notches 151, 152, which can be used for a tire being embedded in and placed and positioned, and the inner contact sides 134, 144 of the top hollow protrusions 13, 14 are configured to clamp the tire. For example, for the rim structure 1, a hookless design is adopted, i.e. the inner contact sides 134, 144 do not have hooked shape but they are smooth planes, such design can be used for tires without inner tubes, and it is further explained that although the rim with a hooked edge may be designed with a slightly wider top side, it may be easily deformed and damaged in the event of a strong impact because the top side only relies on the outward side to support it, and the tire may be damaged and leak (e.g., snakebite) due to the hooked edge at the time of impact. Adopting hookless design with the top side being greater than at least 5 mm and the other sides of the top hollow protrusion having thickness greater than at least 0.6 mm can avoid the above mentioned problems of the rim having hooked edge, while adopting hooked-edge design is useless to achieve the characteristics of lightweight, strong stiffness, better comfort, resistance to flat tire, and avoidance of the damage caused by the impact at the same time.

In one embodiment, the top sides 133, 143 of the top hollow protrusions 13, 14 may be configured to tightly support the tire, for example, at the condition when the tire surface is in direct contact with the top sides 133, 143 after the tire is inflated, or when the tire is squeezed and comes into contact with the top sides 133, 143 at the time of the impact during traveling. Because the widths of the top sides 133, 143 are wide enough to be greater than at least 5 mm (in X direction) and the thickness of the top sides 133, 143 are thick enough to be greater than at least 0.6 mm, the structure can effectively increase the contact area between the rim and the tire and can be resistant to impact, even if the wheel is not equipped with the product such as foaming material or used in the situation where that the tire pressure is not high, it can still maintain the effectiveness of resistance to impact. It is suitable for road bikes, mountain bikes and all kinds of bicycle rims. Because the mountain bike is often used in a situation where the tire pressure is not high, by means of the top hollow protrusions 13, 14 having wider and thicker top sides 133, 143 and having hollow areas 131 disposed, the rim structure 1 can still be applied to the mountain bike used in more demanding situations, can still retain the effectiveness of resistance to impact, and avoid the disadvantage of the increase in weight.

In addition, because the top hollow protrusions 13, 14 have wider and thicker top sides 133, 143 and have the hollow portions 131, 141 disposed, it is more suitable for the inner contact sides 134, 144 with hookless design, so that the rim structure 1 can effectively increase the contact area between the rim and the tire, have the effect of resistance to impact and resistance to snakebite, and avoid the disadvantages of the increase in weight and difficult installation, etc., which is still applicable to the mountain bike used in more demanding situations.

In Fig. 1, the outer top wall 15 and the outer sidewalls 11, 12 form a cavity 16, a width D1 of the cavity 16 exceeds centers 136, 146 of the hollow portion (as shown in Fig 1A where the symbol "+" is marked) but does not exceed a maximum distance D2 of the hollow portions 131, 141 from each other, the maximum distance D2 represents the distances between the extremities of the hollow portions 131, 141 at the outward sides 132, 142, the bottom sides 135, 145 are beside the cavity 16, so that when the rim encounters an impact, it can absorb the impact due to the deformation of the rim without complete support on the bottom sides 135, 145, and utilize the shock absorbing structure formed by the outward side, the top side, the inner contact side and the bottom side to absorb the impact and further reduce the probability of causing snakebite. The bottom side 135 and the outer top wall 15 have an interconnected inner wall surface 161 at one side of the cavity 16, and the inner wall surface 161 is horizontally straightly extended from the bottom side 135 to directly below the notch 151 of the outer top wall 15; the bottom side 145 and the outer top wall 15 have an interconnected inner wall surface 162 at one side of the cavity 16, and the inner wall surface 162 is horizontally straightly extended from the bottom side 145 to directly below the notch 152 of the outer top wall 15, the extension directions of the inner wall surfaces 161, 162 are substantially in parallel with X direction (or substantially vertical to Y direction). An included angle between the extension direction of the inner wall surface 161 (or 162) and a main extension direction of the outer sidewall 11 (or 12) is between 35-60 degrees, preferably 45 degrees, and the top hollow protrusion 13 (or 14) is located directly above this included angle in the drawing. The above structure accompanying the top hollow protrusions 13, 14 having wider and thicker top sides 133, 143 and having the hollow portions 131, 141 disposed can further strengthen the rim structure 1 with effectiveness of resistance to impact and resistance to snakebite (generally referring to during high-speed traveling, encountered a hard protruding object, the tire suddenly bears a single pressure from the external protruding object and the internal rim extrude, resulting in two holes), and avoid disadvantages of increase in weight and difficult installation, etc.

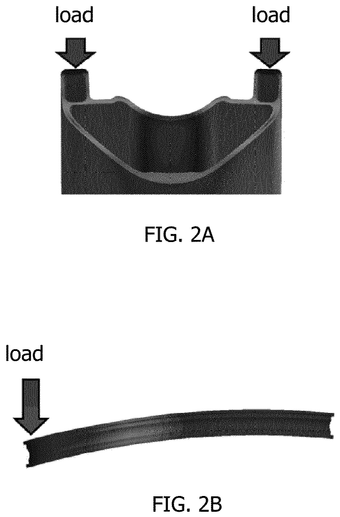

Figs. 2A and 2B are schematic views of the bicycle rim structure with loads applied to the rim in the radial and lateral directions according to an embodiment. In Fig. 2A, the load is applied to the top sides 133, 143 of the two hollow protrusions 13, 14, and the direction of the force of the sum of the loads is directed toward the center of the rim, i.e., simulating a normal force condition, and the direction of the force is mainly parallel to Y direction in Fig. 1. In Fig. 2B, the load is applied to the outward sides 132, 142 of one of the top hollow protrusions 13, 14, i.e., simulating a lateral force condition, and the direction of the force is mainly parallel to X direction in Fig. 1. By simulating the normal force and lateral force on the rim structure, the normal stiffness and the lateral stiffness of the corresponding side of the top hollow protrusion at the current thickness (e.g., Ta, Tb, Tc) can be obtained. Generally speaking, the stiffness increases with the thickness, but too much thickness will result in a heavy rim structure.

According to the research and test with respect to different thicknesses of the top hollow protrusions and considering the relationship between the weight and the stiffness and the rim performance factors, the thickness (e.g., Ta, Tb, Tc) of the corresponding sides of the top hollow protrusions ranges from about 0.6 mm to 1.2 mm and the width of the top side of the top hollow protrusion is greater than 5 mm, allowing the normal stiffness be reached to an acceptable range, e.g. about 66-76 N/mm while also allowing the lateral stiffness be reached to an acceptable range, e.g. about 14.5-16.1 N/mm. The quantity of the stiffness of the bicycle rim structure according to the embodiment is reflected by the thickness between 0.6 mm and 1.2 mm, such stiffness strength can improve the overly hard and bumpy feeling existing in general wheel rim due to the overly strong normal and lateral stiffnesses (e.g., normal stiffness exceeding 100 N/mm, lateral stiffness near 20 N/mm), and enhance vibration absorption in normal direction as well as compliance in lateral direction, and provide more comfortable riding experience while maintaining sufficient stiffness and strength for the rim structure.

As mentioned above, the hollow portion of the top hollow protrusion is located with the spaces defined by the outward side, the top side and the inner contact side, the width of the top side is greater than at least 5 mm, and the thicknesses of the outward side, the top side and the inner contact side are greater than at least 0.6 mm, so that the rim structure can effectively increase the contact area between the rim and the tire and withstand the load, thus achieving the effect of resistance to impact and resistance to snakebite for the bicycle rim structure, and avoiding the disadvantages of increase in weight and difficult installation, and combining characteristics of comfort, grip, weight and resistance to flat tire, etc. Even if, for example, the foaming material products are not installed on wheels or at usage condition that the tire pressure is not high, it still retains the aforementioned effects of resistance to impact and resistance to snakebite. It is suitable for road bikes, mountain bikes, and all kinds of bicycle rims.

The foregoing outlines features of several embodiments or examples so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments or examples introduced herein. Those skilled in the art should also realize that such equivalent constructions do not depart from the spirit and scope of the present disclosure, and that they may make various changes, substitutions, and alterations herein without departing from the spirit and scope of the present disclosure.

### Industry Utility

The bicycle rim structure provided in the present disclosure can effectively increase the contact area between the rim and the tire and withstand the load, thus achieving the effect of resistance to impact and resistance to snakebite for the bicycle rim structure, and avoiding the disadvantages of increase in weight and difficult installation, and combining characteristics of comfort, grip, weight and resistance to flat tire, etc. Even if, for example, the foaming material products are not installed on wheels or at usage condition that the tire pressure is not high, it still retains the aforementioned effects of resistance to impact and resistance to snakebite. It is suitable for road bikes, mountain bikes, and all kinds of bicycle rims.

## Claims

1. A bicycle rim structure, comprising:
two outer sidewalls, disposed opposite each other on two sides of the rim structure, ends of the outer sidewalls being connected to each other; and
two top hollow protrusions, respectively at upper portions of the outer sidewalls,
wherein each of the top hollow protrusions has a hollow portion, an outward side, a top side and an inner contact side, wherein an included angle less than 180 degrees is between an extension direction of the outward side and an extension direction of a corresponding one of the outer sidewalls, the hollow portion is defined by the outward side, the top side and the inner contact side, the top side connects the outward side and the inner contact side, a width of the top side is greater than at least 5 mm, thicknesses of the outward side, the top side and the inner contact side are greater than at least 0.6 mm.

2. The bicycle rim structure of claim 1, wherein the thicknesses of the outward side, the top side and the inner contact side are between 0.6 mm and 1.2 mm.

3. The bicycle rim structure of claim 1, wherein the outward sides, the top sides and the inner contact sides are straight.

4. The bicycle rim structure of claim 1, wherein the outward sides are respectively disposed in approximate parallel with corresponding ones of the inner contact sides.

5. The bicycle rim structure of claim 1, wherein the inner contact sides are smooth planes, and the bicycle rim structure is a hookless rim structure.

6. The bicycle rim structure of claim 1, wherein a shape of the hollow portion is a rectangle where included angles of four sides are rounded corners.

7. The bicycle rim structure of claim 1, wherein a shape of the hollow portion is a curved shape, and the thicknesses of the outward side, the top side and the inner contact side are defined as shortest distances from the hollow portion respectively to outer surfaces of the outward side, the top side and the inner contact side.

8. The bicycle rim structure of claim 1, wherein, the hollow portion includes a plurality of hollow sub-portions.

9. The bicycle rim structure of claim 1, further comprising:
an outer top wall, connected between the top hollow protrusions and not protruding from the top hollow protrusions,
wherein, the outer top wall and the outer sidewalls form a cavity, and a width of the cavity exceeds centers of the hollow portions but does not exceed a maximum distance of the hollow portions.

10. The bicycle rim structure of claim 9,
wherein, each of the top hollow protrusions has a bottom side, the hollow portion is defined by the outward side, the top side, the inner contact side and the bottom side, and the bottom side connects the outward side and the inner contact side, and the outward side, the top side, the inner contact side and the bottom side form a shock absorbing structure, two ends of the bottom side are respectively connected to one of the outer sidewalls and the outer top wall, and the bottom side is beside the cavity,
wherein, one of the bottom sides and the outer top wall have an interconnected inner wall surface at one side of the cavity, and the inner wall surface is horizontally straightly extended from the bottom side to directly below a notch of the outer top wall.

11. The bicycle rim structure of claim 10, wherein an included angle between an extension direction of the inner wall surface and an extension direction of a corresponding one of the outer sidewalls is between 35-60 degrees.

12. The bicycle rim structure of claim 1, wherein, the rim structure has a rim height, and a ratio of the rim height to a width of the top side is smaller than 16.

13. A hookless rim structure for bicycle, comprising:
two outer sidewalls, disposed opposite each other on two sides of the rim structure, ends of the outer sidewalls being connected to each other; and
two top hollow protrusions, respectively at upper portions of the outer sidewalls,
wherein each of the top hollow protrusions has a hollow portion, an outward side, a top side and an inner contact side, wherein an included angle less than 180 degrees is between an extension direction of the outward side and an extension direction of a corresponding one of the outer sidewalls, the hollow portion is defined by the outward side, the top side and the inner contact side, the top side connects the outward side and the inner contact side, a width of the top side is greater than at least 5 mm, thicknesses of the outward side, the top side and the inner contact side is greater than at least 0.6 mm,
wherein, each of the top hollow protrusions has a bottom side, the hollow portion is defined by the outward side, the top side, the inner contact side and the bottom side, and the bottom side connects the outward side and the inner contact side,
wherein, the thicknesses of the outward side, the top side and the inner contact side are between 0.6 mm and 1.2 mm,
wherein, the outward sides, the top sides and the inner contact sides are straight, wherein, the outward sides are respectively disposed in approximate parallel with corresponding ones of the inner contact sides,
wherein, the inner contact sides are smooth planes,
wherein, the inner contact sides of the top hollow protrusions are configured to clamp a tire, and the top sides of the top hollow protrusions are configured to support the tire,
wherein, the bicycle rim structure further comprises an outer top wall, the outer top wall is connected between the top hollow protrusions and does not protrude from the top hollow protrusions,
wherein, the outer top wall and the outer sidewalls form a cavity, and a width of the cavity exceeds centers of the hollow portions but does not exceed a maximum distance of the hollow portions,
wherein, the outward side, the top side, the inner contact side and the bottom side form a shock absorbing structure, two ends of the bottom side are respectively connected to one of the outer sidewalls and the outer top wall, and the bottom side is beside the cavity,
wherein, one of the bottom sides and the outer top wall have an interconnected inner wall surface at one side of the cavity, and the inner wall surface is horizontally straightly extended from the bottom side to directly below a notch of the outer top wall,
wherein, an included angle between an extension direction of the inner wall surface and an extension direction of a corresponding one of the outer sidewalls is between 35-60 degrees,
wherein, the rim structure has a rim height, and a ratio of the rim height to a width of the top side is smaller than 16.
